# EUROPEAN PATENT APPLICATION

(11) **EP 0 644 068 A1**
(43) Date of publication of application: **22.03.1995**
(21) Application number: 94120537.9
(22) Date of filing: 30.10.1991
(51) Int. Cl.: B44C 5/04, B44C 1/10, E04F 13/08, E06B 3/72

(54) **Method of decorating a panel**

(30) Priority: 30.10.1990 GB 9023602
(62) Divisional of application: 91310023.6
(71) Applicant: Aumac Limited, Templefields, Harlow, Essex CM20 2BQ (GB)
(72) Inventor: Audritt, Vincent Mark, Harlow, Essex CM20 2BQ (GB); Audritt, Michael Leonard, Harlow, Essex CM20 2BQ (GB)
(74) Representative: Lawrence, Malcolm Graham

(57) **Abstract**

The invention concerns a method of applying a decorative finish to a raised and fielded panel. In the method a panel and a sheet of decorative material are brought together so that the sheet overlies the raised and fielded side of the panel and at least one of the raised and fielded side of the panel or the obverse face of the sheet of decorative material has a coating of a suitable composition. Such a composition comprises a heat activatable adhesive, with the adhesive properties of the composition being activatable at or above about 80^{o}C. The sheet of decorative material is then pressed against the panel at a temperature of from about 90^{o} to about 170^{o}C and at a pressure of from about 1 to about 6 bars for from about 5 to about 25 seconds. In that manner there is formed a decorative surface on the raised and fielded side of the panel in which the adhered sheet follows the contours of the panel. The advantage of the method is that it can avoid wrinkling of the sheet of decorative material.

## Description

The present invention relates to the decoration of panels and, in particular, to a method of applying a decorative finish to a raised and fielded door or like panel.

In order to conserve forests it is becoming increasingly undesirable to produce solid wood products. For example, solid wood mahogany products are becoming unfashionable with all true conservationists because of the effect on tropical rain forests caused by deforestation to supply mahogany wood. Moreover, equally good products can be produced from wood waste formed into, for example, medium density fibreboard by laminating to the outside surface thereof a decorative finish applied as a sheet of material such as paper, plastics or a paper/plastics laminate.

Thus, it is known to apply a decorative finish to door or like panels using various kinds of sheet material and a heat activatable coating on the panel. The panel and sheet material typically are pressed together at a temperature at which the coating is activated and the thus-formed laminate then cooled to provide a decorated panel.

While the above technique is generally satisfactory difficulties can arise (a) with the use of paper sheet material and/or (b) where the panel is a raised and fielded panel with fielding varying in at least two directions at each corner of the panel. In such circumstances wrinkling can occur, especially at each corner and the decorative finish can be spoiled.

Within the above context we have now found surprisingly that wrinkling of the sheet material especially at each corner can be avoided by a careful selection of the operating conditions, generally time, temperature and pressure.

Accordingly, the present invention provides a method of applying a decorative finish to a raised and fielded door or like panel, which method comprises bringing together the panel and a sheet of decorative material so that the sheet overlies the raised and fielded side of the panel, at least one of the raised and fielded side of the panel or the obverse face of the sheet of decorative material having a coating of a composition comprising a heat activatable adhesive, the adhesive properties of the composition being activatable at or above about 80^{o}C, and pressing the sheet of decorative material against the door panel at a temperature of from about 90^{o} to about 170^{o}C and at a pressure of from about 1 to about 6 bars for from about 5 to about 25 seconds, so as to form a decorative surface on the raised and fielded side of the panel in which the adhered sheet follows the contours of the panel.

The method of the invention is particularly useful when applied to doors or the like in which a panel is framed by a framing element at each side edge and the abutting ends of the elements are mitred. Typically, in such an arrangement the panel may comprise a medium density fibreboard and the framing elements may comprise a laminated profile. Especially the framing elements may comprise a chipboard or medium density fibreboard laminated profile, which is already coated or laminated before the method of the invention is carried out. Thus, typically the profiles may be chip board profiles wrapped in decorative sheet material, the sheet material being chosen to match or contrast with that provided by the sheet material to be adhered to the panel.

In the method of the invention the heat activatable composition may be any composition activatable at or above about 80^{o}C and compatible with the panel. Preferably, the composition comprises a polyvinylacetate cross-linking adhesive. Alternatively, however, or additionally, the composition may comprise polyurethane.

Prior to carrying out the method of the invention the said composition is applied to the panel face of the obverse face of the decorative sheet by any suitable means such as by brushing or roller coating. Preferably, however, the composition is applied to the door panel face by spraying.

As indicated above, the problem of wrinkling which can be solved by the method of the invention is exhibited particularly when the sheet material is paper. Accordingly, the preferred decorative material for use in the method of the invention comprises paper. More preferably, the decorative material is a paper sheet, although alternatively the decorative material may be a laminate of paper and a substrate. In particular, the substrate may be a fleece backing substrate.

In the method of the invention the steps used to decorate the panel are particularly applicable when the panel fielding varies in at least two or three directions at each corner of the panel. Furthermore, the method is preferably one wherein the panel and the sheet of decorative material are brought together in a membrane (or bag) press.

In carrying out the method of the invention the coated panel face and the decorative material are brought together under selected conditions within the above given ranges in a press. Then, if the pressing is not satisfactory and wrinkles result (this may be due to varying ambient temperature) the pressing is repeated at a higher temperature nearer the upper limit of about 170^{o}C - preferably at or above about 135^{o}C. Next, if the pressing remains unsatisfactory the pressing time and/or the pressing pressure is/are increased until a satisfactory result is obtained. It is, of course, to be understood that the temperature mentioned herein is the indicated temperature of the press or pressing conditions used, that is to say by indicated temperature we mean the temperature indicated by the sensor display on the press used. Also, it is to be understood that for reasons of cost the temperature of pressing should be kept as low as possible.

The method of the invention will now be described in detail by way of example only with reference to the following specific Examples.

### Example 1

A medium density fibreboard raised and fielded door panel having the following dimensions:
- Width:: 40 cm
- Length:: 60 cm
- Fielding:: Panel thickness reduced from 9 mm to 5 mm through a shallow curve of radius 45 mm
was coated on its outer fielded face with a polyvinylacetate adhesive Helmutin type Helmipur 34333 at a coating weight of 70 to 80 gsm. The coated panel face was then covered by an 80 gsm paper decorated with a wood grain finish on the paper surface not adjacent the coated face and the whole pressed in a membrane (or bag) press without vacuum at about 140^{o}C for about 12 seconds at a pressure of about 2.5 bar.

The resulting panel was of a good finish and there were no wrinkles at the fielded corners.

### Example 2

The method of Example 1 was repeated except that the door panel was 30 cm wide and 61 cm long. Also, the polyvinylacetate adhesive was a standard laminating grade of PVA glue and the decorative sheet material was a 140 gsm paper with a fleece backing. The whole was pressed in a membrane (or bag) press without vacuum at about 130^{o}C for about 20 seconds at a pressure of about 2.5 bar. Again, the resulting panel was of good finish without wrinkling.

It is, of course, to be understood that the invention is not limited to the specific details given above and that numerous variations may be made without departing from the spirit and scope of the claims which follow.

## Claims

1. A method of applying a decorative finish to a raised and fielded panel, which method comprises bringing together the panel and a sheet of decorative material so that the sheet overlies the raised and fielded side of the panel, at least one of the raised and fielded side of the panel or the obverse face of the sheet of decorative material having a coating of a composition comprising a heat activatable adhesive, the adhesive properties of the composition being activatable at or above about 80^{o}C, and pressing the sheet of decorative material against the panel at a temperature of from about 90^{o} to about 170^{o}C and at a pressure of from about 1 to about 6 bars for from about 5 to about 25 seconds, so as to form a decorative surface on the raised and fielded side of the panel in which the adhered sheet follows the contours of the panel.

2. A method according to claim 1, wherein the panel is framed by a framing element at each side edge and the abutting ends of the elements are mitred.

3. A method according to claim 1 or claim 2, wherein the panel comprises a medium density fibreboard.

4. A method according to claim 2 or claim 3, wherein the framing elements comprise a laminated profile, preferably a chipboard or medium density fibreboard laminated profile.

5. A method according to any one of the preceding claims, wherein the composition comprises a polyvinylacetate cross-linking adhesive.

6. A method according to any one of the preceding claims, wherein the composition comprises a polyurethane.

7. A method according to any one of the preceding claims, wherein the composition is applied to the panel face, for example, by spraying.

8. A method according to any one of the preceding claims, wherein the decorative material comprises paper, preferably a paper sheet or a laminate of paper and substrate, for example, a fleece backing.

9. A method according to any one of the preceding claims, wherein the panel fielding varies in at least two directions at each corner of the panel.

10. A method according to any one of the preceding claims, wherein the door panel and sheet of decorative material are brought together in a membrane press.
